# EUROPEAN PATENT APPLICATION

(11) **EP 3 706 368 A1**
(43) Date of publication of application: **09.09.2020**
(21) Application number: 18904061.1
(22) Date of filing: 15.09.2018
(51) Int. Cl.: H04L 12/24

(54) **METHOD AND DEVICE FOR DEPLOYING VIRTUALIZED NETWORK ELEMENT DEVICE**

(30) Priority: 31.01.2018 CN 201810096039
(71) Applicant: HUAWEI TECHNOLOGIES CO., LTD., Shenzhen, Guangdong 518129 (CN)
(72) Inventor: ZHANG, Fan, Shenzhen, Guangdong 518129 (CN); ZHANG, Xiaowei, Shenzhen, Guangdong 518129 (CN); WU, Yong, Shenzhen, Guangdong 518129 (CN); LI, Shitao, Shenzhen, Guangdong 518129 (CN); YANG, Xu, Shenzhen, Guangdong 518129 (CN)
(74) Representative: Gill Jennings & Every LLP
(86) International application number: PCT/CN2018/105880
(87) International publication number: WO 2019/148854

(57) **Abstract**

This application provides a method and an apparatus for deploying a virtualized network element device. The method for deploying a virtualized network element device includes: obtaining a deployment template for a virtual machine of a virtualized network element device and a logical region in which the virtual machine is located, where the logical region in which the virtual machine is located is determined based on the deployment template for the virtual machine of the virtualized network element device, an available resource for deploying the virtual machine, and a deployment requirement, the deployment requirement indicates a logical region for performing an affinity and/or anti-affinity setting, and an affinity group and/or anti-affinity group setting, and the logical region for performing the affinity and/or anti-affinity setting is one of a data center, a region, an availability zone, and a host aggregate; obtaining, through mapping based on the logical region in which the virtual machine is located, a physical region in which the virtual machine is located; and sending deployment request information to a layer I infrastructure manager, where the deployment request information includes service resource specification of each virtual machine and the physical region in which the virtual machine is located.

## Description

This application claims priority to Chinese Patent Application No. 201810096039.6, filed with the China National Intellectual Property Administration on January 31, 2018 and entitled "METHOD AND APPARATUS FOR DEPLOYING VIRTUALIZED NETWORK ELEMENT DEVICE", which is incorporated herein by reference in its entirety.

### TECHNICAL FIELD

This application relates to the computer network field, and in particular, to a method and an apparatus for deploying a virtualized network element device.

### BACKGROUND

In the past, a network functions virtualization (Network Functions Virtualization, NFV) platform is established based on OpenStack. Universal hardware such as an x86computer, and a virtualization technology are used to support software processing in implementing many functions, thereby reducing high device costs of a network. Software and hardware decoupling and function abstraction may be used. In this way, a network device function is no longer dependent on special-purpose hardware. Resources can be fully and flexibly shared. A new service is quickly developed and deployed. Automatic deployment, flexible scaling, fault isolation, self-healing, and the like are performed based on an actual service requirement.

However, in the past, anti-affinity deployment performed on virtual machines based on OpenStack is merely effective at a host (host) level. To be specific, virtual machines (Virtual Machine, VM) in an affinity group (Affinity Group)/anti-affinity group (Anti-Affinity Group) are deployed in a same host/different hosts. Because the deployment manner is limited to an anti-affinity setting at the host level, the virtual machines are deployed with poor flexibility, and a requirement for the anti-affinity deployment in a larger region cannot be met.

### SUMMARY

Embodiments of this application put forward a method and an apparatus for deploying a virtualized network element device.

According to a first aspect, an embodiment of this application provides a method for deploying a virtualized network element device, including: obtaining a deployment template for a virtual machine of a virtualized network element device and a logical region in which the virtual machine is located, where the deployment template for the virtual machine indicates the quantity of virtual machines and a service resource specification of each virtual machine, the logical region in which the virtual machine is located is determined based on the deployment template for the virtual machine of the virtualized network element device, an available resource for deploying the virtual machine, and a deployment requirement, the deployment requirement indicates a logical region for performing an affinity and/or anti-affinity setting, and an affinity group and/or anti-affinity group setting, and the logical region for performing the affinity and/or anti-affinity setting is one of a data center, a region, an availability zone, and a host aggregate; obtaining, through mapping based on the logical region in which the virtual machine is located, a physical region in which the virtual machine is located; and sending deployment request information to a layer I infrastructure manager, where the deployment request information includes the service resource specification of each virtual machine and the physical region in which the virtual machine is located.

Therefore, an anti-affinity virtual machine deployment policy can be extended from a host level to a data center, a region, an availability zone, a host aggregate, or the like, thereby improving flexibility of an anti-affinity capacity, and better meeting a balance between client deployment flexibility and overall reliability.

With reference to the first aspect, in a first possible implementation, the deployment template for the virtual machine of the virtualized network element device and the logical region in which the virtual machine is located are obtained from a network functions virtualization orchestrator. The logical region in which the virtual machine is located is determined based on a resource ratio allocation principle used during virtual machine deployment. The resource ratio allocation principle indicates a resource utilization requirement and/or a resource equalization requirement for the available resource for deploying the virtual machine.

Therefore, the virtual machine can be deployed based on different resource ratios between data centers, or regions, or availability zones, or host aggregates, thereby significantly improving resource utilization, and increasing an application scenario of anti-affinity. In addition, the following case is avoided: A certain data center, region, availability zone, or host aggregate is specified to centrally deploy virtual machines, causing an insufficient resource and increasing a deployment failure probability. Therefore, availability of an overall scheme is improved.

With reference to the first aspect, in a second possible implementation, the obtaining a deployment template for a virtual machine of the virtualized network element device and a logical region in which the virtual machine is located includes: receiving, from a network functions virtualization orchestrator, the deployment template for the virtual machine of the virtualized network element device, the available resource for deploying the virtual machine, and the deployment requirement; and automatically deploying the logical region in which the virtual machine is located, based on the deployment template for the virtual machine of the virtualized network element device, the available resource for deploying the virtual machine, and the deployment requirement.

Therefore, the virtual machine can be deployed in a network functions virtualization manager, thereby improving flexibility of the deployment.

With reference to the first aspect, in the foregoing possible implementations, the method further includes: further receiving, from the network functions virtualization orchestrator, a resource ratio allocation principle used during virtual machine deployment, where the resource ratio allocation principle indicates a resource utilization requirement and/or a resource equalization requirement for the available resource for deploying the virtual machine; and when the logical region in which the virtual machine is located is deployed, further deploying, based on the resource ratio allocation principle, the logical region in which the virtual machine is located.

Therefore, the virtual machine is further deployed based on the resource ratio allocation principle. In this way, the following case can be avoided: A certain data center, region, availability zone, or host aggregate is specified to centrally deploy virtual machines, causing an insufficient resource and increasing a deployment failure probability. Therefore, availability of an overall scheme is improved.

With reference to the first aspect, in the foregoing possible implementations, the receiving is performed in a manner of an interface message or in a manner of a virtualized network function description file.

With reference to the first aspect, in the foregoing possible implementations, the affinity indicates that virtual machines are deployed in a same logical region, and the anti-affinity indicates that virtual machines are deployed in different logical regions.

According to a second aspect, an embodiment of this application provides a method for deploying a virtualized network element device, including: receiving a deployment template for a virtual machine of a virtualized network element device, an available resource for deploying the virtual machine, and a deployment requirement, where the deployment template for the virtual machine indicates the quantity of virtual machines and a service resource specification of each virtual machine, the deployment requirement indicates a logical region for performing an affinity and/or anti-affinity setting, and an affinity group and/or anti-affinity group setting, and the logical region for performing the affinity and/or anti-affinity setting is one of a data center, a region, an availability zone, and a host aggregate; automatically deploying a logical region in which the virtual machine is located, based on the deployment template for the virtual machine of the virtualized network element device, the available resource for deploying the virtual machine, and the deployment requirement; and sending, to a virtualized network element device manager, the service resource specification of the virtual machine and the logical region in which the virtual machine is located.

Therefore, an anti-affinity virtual machine deployment policy can be extended from a host level to a data center, a region, an availability zone, a host aggregate, or the like, thereby improving flexibility of an anti-affinity capacity, and better meeting a balance between client deployment flexibility and overall reliability.

With reference to the second aspect, in the foregoing possible implementation, the method further includes: further receiving a resource ratio allocation principle used during virtual machine deployment, where the resource ratio allocation principle indicates a resource utilization requirement and/or a resource equalization requirement for the available resource for deploying the virtual machine; and when the logical region in which the virtual machine is located is automatically deployed, further deploying, based on the resource ratio allocation principle, the logical region in which the virtual machine is located.

Therefore, the virtual machine is further deployed based on the resource ratio allocation principle. In this way, the following case can be avoided: A certain data center, region, availability zone, or host aggregate is specified to centrally deploy virtual machines, causing an insufficient resource and increasing a deployment failure probability. Therefore, availability of an overall scheme is improved.

With reference to the second aspect, in the foregoing possible implementations, the affinity indicates that virtual machines are deployed in a same logical region, and the anti-affinity is that virtual machines are deployed in different logical regions.

According to a third aspect, an embodiment of this application provides an apparatus for deploying a virtualized network element device, including: an obtaining unit, configured to obtain a deployment template for a virtual machine of a virtualized network element device and a logical region in which the virtual machine is located, where the deployment template for the virtual machine indicates the quantity of virtual machines and a service resource specification of each virtual machine, the logical region in which the virtual machine is located is determined based on the deployment template for the virtual machine of the virtualized network element device, an available resource for deploying the virtual machine, and a deployment requirement, the deployment requirement indicates a logical region for performing an affinity and/or anti-affinity setting, and an affinity group and/or anti-affinity group setting, and the logical region for performing the affinity and/or anti-affinity setting is one of a data center, a region, an availability zone, and a host aggregate; a mapping unit, configured to obtain, through mapping based on the logical region in which the virtual machine is located, a physical region in which the virtual machine is located; and a sending unit, configured to send deployment request information to a layer I infrastructure manager, where the deployment request information includes the service resource specification of each virtual machine and the physical region in which the virtual machine is located.

Therefore, an anti-affinity virtual machine deployment policy can be extended from a host level to a data center, a region, an availability zone, a host aggregate, or the like, thereby improving flexibility of an anti-affinity capacity, and better meeting a balance between client deployment flexibility and overall reliability.

With reference to the third aspect, in a first possible implementation, the deployment template for the virtual machine of the virtualized network element device and the logical region in which the virtual machine is located are obtained from a network functions virtualization orchestrator. The logical region in which the virtual machine is located is determined based on a resource ratio allocation principle used during virtual machine deployment. The resource ratio allocation principle indicates a resource utilization requirement and/or a resource equalization requirement for the available resource for deploying the virtual machine.

Therefore, the virtual machine can be deployed based on different resource ratios between data centers, or regions, or availability zones, or host aggregates, thereby significantly improving resource utilization, and increasing an application scenario of anti-affinity. In addition, the following case is avoided: A certain data center, region, availability zone, or host aggregate is specified to centrally deploy virtual machines, causing an insufficient resource and increasing a deployment failure probability. Therefore, availability of an overall scheme is improved.

With reference to the third aspect, in a second possible implementation, the obtaining unit includes: a receiving unit, configured to receive, from a network functions virtualization orchestrator, the deployment template for the virtual machine of the virtualized network element device, the available resource for deploying the virtual machine, and the deployment requirement; and a deployment unit, configured to automatically deploy the logical region in which the virtual machine is located, based on the deployment template for the virtual machine of the virtualized network element device, the available resource for deploying the virtual machine, and the deployment requirement.

Therefore, the virtual machine can be deployed in a network functions virtualization manager, thereby improving flexibility of the deployment.

With reference to the third aspect, in the second possible implementation, the receiving unit is configured to further receive a resource ratio allocation principle used during virtual machine deployment. The resource ratio allocation principle indicates a resource utilization requirement and/or a resource equalization requirement for the available resource for deploying the virtual machine. The deployment unit is configured to further deploy, based on the resource ratio allocation principle, the logical region in which the virtual machine is located.

Therefore, the virtual machine can be deployed based on different resource ratios between data centers, or regions, or availability zones, or host aggregates, thereby significantly improving resource utilization, and increasing an application scenario of anti-affinity. In addition, the following case is avoided: A certain data center, region, availability zone, or host aggregate is specified to centrally deploy virtual machines, causing an insufficient resource and increasing a deployment failure probability. Therefore, availability of an overall scheme is improved.

With reference to the third aspect, in the foregoing possible implementations, the receiving unit performs receiving in a manner of an interface message or in a manner of a virtualized network function description file.

With reference to the third aspect, in the foregoing possible implementations, the affinity indicates that virtual machines are deployed in a same logical region, and the anti-affinity indicates that virtual machines are deployed in different logical regions.

According to a fourth aspect, an embodiment of this application provides an apparatus for deploying a virtualized network element device, including: a receiving unit, configured to receive a deployment template for a virtual machine of a virtualized network element device, an available resource for deploying the virtual machine, and a deployment requirement, where the deployment template for the virtual machine indicates the quantity of virtual machines and a service resource specification of each virtual machine, the deployment requirement indicates a logical region for performing an affinity and/or anti-affinity setting, and an affinity group and/or anti-affinity group setting, and the logical region for performing the affinity and/or anti-affinity setting is one of a data center, a region, an availability zone, and a host aggregate; a deployment unit, configured to automatically deploy a logical region in which the virtual machine is located, based on the deployment template for the virtual machine of the virtualized network element device, the available resource for the virtual machine, and the deployment requirement; and a sending unit, configured to send, to a virtualized network element device manager, the service resource specification of the virtual machine and the logical region in which the virtual machine is located.

Therefore, an anti-affinity virtual machine deployment policy can be extended from a host level to a data center, a region, an availability zone, a host aggregate, or the like, thereby improving flexibility of an anti-affinity capacity, and better meeting a balance between client deployment flexibility and overall reliability.

With reference to the fourth aspect, in the foregoing possible implementation, the receiving unit is configured to further receive a resource ratio allocation principle used during virtual machine deployment. The resource ratio allocation principle indicates a resource utilization requirement and/or a resource equalization requirement for the available resource for deploying the virtual machine. The deployment unit is configured to further deploy, based on the resource ratio allocation principle, the logical region in which the virtual machine is located.

Therefore, the virtual machine is further deployed based on the resource ratio allocation principle. In this way, the following case can be avoided: A certain data center, region, availability zone, or host aggregate is specified to centrally deploy virtual machines, causing an insufficient resource and increasing a deployment failure probability. Therefore, availability of an overall scheme is improved.

With reference to the fourth aspect, in the foregoing possible implementations, the affinity indicates that virtual machines are deployed in a same logical region, and the anti-affinity indicates that virtual machines are deployed in different logical regions.

According to a fifth aspect, an embodiment of this application provides a computer readable storage medium. The computer readable storage medium stores an instruction. The instruction is executed by a computer to implement the methods described in the foregoing aspects.

According to a sixth aspect, an embodiment of this application provides a computer program product including an instruction. When the instruction is run on a computer, the computer is enabled to perform the methods described in the foregoing aspects.

According to a seventh aspect, an embodiment of this application provides a computer program. When the computer program is run on a computer, the computer is enabled to perform the methods described in the foregoing aspects.

### BRIEF DESCRIPTION OF DRAWINGS

FIG 1 is a schematic diagram of an NFV architecture according to an embodiment of this application;
FIG 2 is a schematic diagram of a relationship between logical regions according to an embodiment of this application;
FIG. 3 is a flowchart of VM deployment based on conventional host anti-affinity;
FIG. 4 is a schematic diagram of conventional affinity and anti-affinity deployment;
FIG. 5 is a schematic diagram of affinity and anti-affinity deployment according to an embodiment of this application;
FIG. 6 is a diagram of VM deployment performed based on a resource ratio allocation principle according to an embodiment of this application;
FIG. 7 is a flowchart of VM deployment according to an embodiment of this application;
FIG. 8 is another flowchart of VM deployment according to an embodiment of this application;
FIG. 9 is a block diagram of an apparatus for deploying a VNF according to an embodiment of this application;
FIG. 10 is another block diagram of an apparatus for deploying a VNF according to an embodiment of this application; and
FIG. 11 is a schematic block diagram of a network device for deploying a VNF according to an embodiment of this application.

### DESCRIPTION OF EMBODIMENTS

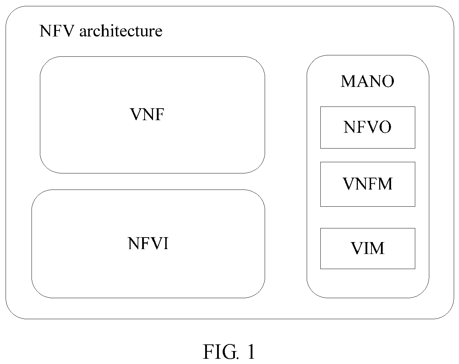

FIG. 1 is a schematic diagram of an NFV architecture according to an embodiment of this application. An NFV technology mainly involves the following three aspects: a virtualized network function (Virtualized Network Function, VNF) to be set, which is also referred to as a virtualized network element device; a network functions virtualization infrastructure (NFV Infrastructure, NFVI) to implement the foregoing VNF; and a part for performing NFV management and orchestration (Network Functions Virtualization Management and Orchestration, NFV-MANO, MANO for short).

The VNF is a virtual application. A function of the VNF is implemented by deploying a VM for the VNF. Each VNF may be divided into a group of VNFCs (virtualized network function component, VNF Component) and a connection relationship between the VNFCs. Each VNFC is mapped to a VM

The NFVI deploys a VM on a physical resource of the NFVI to implement the VNF and provide a virtual resource required for supporting execution of the VNF A hardware part and a software component are combined in the NFVI. The NFVI is a resource pool, and is a physical infrastructure connected by using a communications network. The MANO is responsible for management and orchestration of an entire NFVI resource, and is responsible for mapping and association of a service network and an NFVI resource, including orchestration and life cycle management of a physical and/or software resource supporting physical infrastructure virtualization, and life cycle management of the VNF. An NFVO (Network Functions Virtualization Orchestrator, network functions virtualization orchestrator), a VNFM (Network Functions Virtualization Manager, network functions virtualization manager), and a VIM (Virtualised Infrastructure Manager, virtualized infrastructure manager) are jointly used to complete/provide the functions. The NFVO mainly provides a global resource scheduling capability and a global service orchestration capability. The VNFM is responsible for the life cycle management of the VNF, and provides an automation capacity including deployment, scale-out, scale-in, termination, and the like. The VIM is an NFVI management system, and supports management of common physical and virtual resources, resource allocation and scheduling, and the like. However, function division of the NFVO, the VNFM, and the VIM is not limited hereto, and the function division may be alternatively performed in another manner.

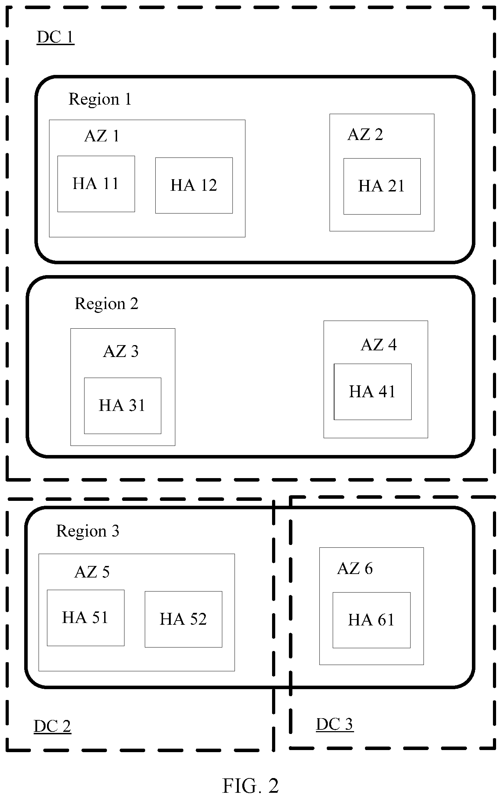

FIG. 2 is a schematic diagram of a logical region according to an embodiment of this application. The logical region includes a data center (data center, DC), a region (Region), an availability zone (Availability Zone, AZ), and a host aggregate (Host Aggregate, HA). The DC is a type of a logical region obtained through division from a network connection perspective. The DC can accommodate a plurality of servers and communications devices. These devices are placed together because the devices have a same requirement for an environment and a same requirement for physical security, and it is convenient to maintain the devices when the devices are placed together. The region is a type of a physical region obtained through division based on a territory, for example, central China and east China. Usually, tenants of a virtual private cloud (Virtual Private Cloud, VPC) all choose to be in one Region, and do not span regions. The DC and the region indicate that a physical region is divided from different dimensions. The DC may overlap the region. One DC may include a plurality of regions, and one region may also span a plurality of DCs. The AZ is an independent and physically isolated availability zone. One region includes a plurality of AZs. An AZ is not affected when a fault occurs in another AZ. The HA is composed of a plurality of hosts in the AZ. One AZ may include a plurality of HAs. One HA may include a plurality of hosts. As shown in FIG. 2, a DC 1 includes a region 1 and a region 2, a region 3 spans a DC 2 and a DC 3, the region1 includes an AZ 1 and an AZ 2, and the AZ 1 includes an HA 11 and an HA 12.

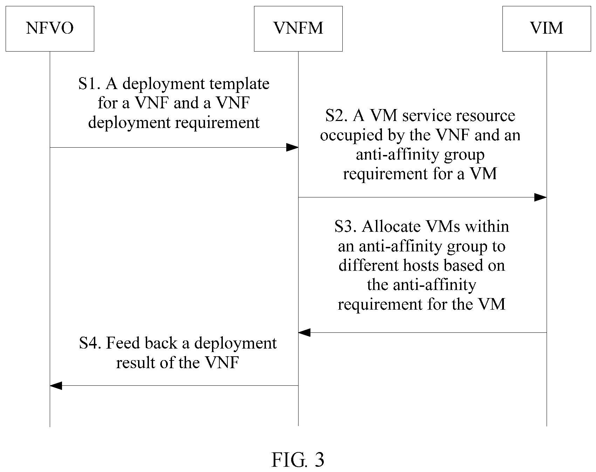

FIG. 3 is a flowchart of VM deployment based on conventional host anti-affinity. As shown in FIG. 3, in a step S1, an NFVO sends a deployment template for a VM of a VNF and a deployment requirement to a VNFM. The deployment template indicates the quantity of virtual machines and a service resource specification of each virtual machine. The deployment requirement indicates an affinity group and/or anti-affinity group setting. In a step S2, the VNFM parses information received from the NFVO, and sends the service resource specification of each VM occupied by the VNF and an affinity group and/or anti-affinity group requirement for VMs to a VIM. For example, when one VNF is deployed, a subsystem for completing a same function requires three instances to be deployed and needs to occupy three virtual machines with a same specification. The three virtual machines may form an anti-affinity group.

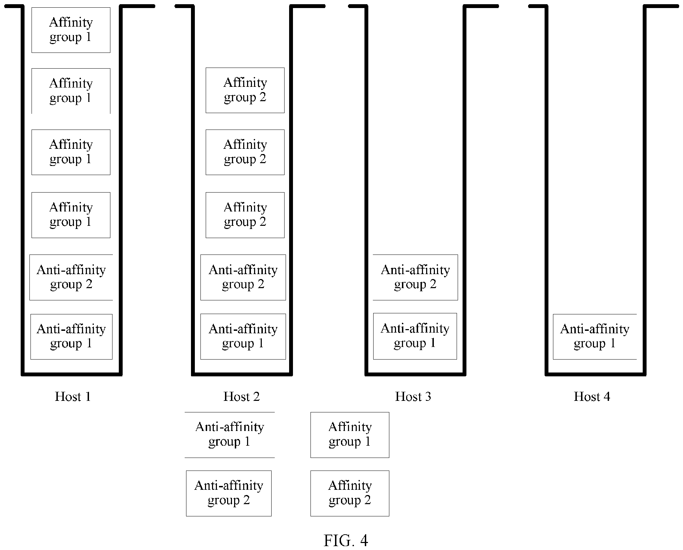

FIG 4 is used herein to describe affinity and anti-affinity. FIG. 4 is a schematic diagram of conventional affinity and anti-affinity deployment. The affinity indicates that during VNF deployment, VMs need to be deployed in a same host, and the VMs are not mutually exclusive and are deployed in the same host (Host). For example, FIG. 4 includes two affinity groups established based on an affinity requirement, which are respectively an affinity group 1 and an affinity group 2. Four VMs in the affinity group 1 are deployed in a same host1, and three VMs in the affinity group 2 are deployed in a same host2. In other words, VMs in a same affinity group are required to be deployed in a same host. The anti-affinity indicates that during VM deployment, VMs need to be deployed in different hosts because the VMs are mutually exclusive and cannot be deployed in a same host. For example, FIG. 4 includes two anti-affinity groups established based on an anti-affinity requirement, which are respectively an anti-affinity group 1 and an anti-affinity group 2. Four VMs in the anti-affinity group 1 are respectively deployed in the host 1, the host 2, a host 3, and a host 4, and three VMs in the anti-affinity group 2 are respectively deployed in the host 1, the host 2, and the host 3. In other words, VMs in a same anti-affinity group are mutually exclusive, and are required to be deployed in different hosts. Herein, the conventional affinity/anti-affinity deployment is limited to only a host level.

The following returns to FIG. 3 to continue the description. In a step S3, the VIM allocates a resource for the VM based on an anti-affinity requirement sent by the VNFM and by using an operational capacity of an open source program such as OpenStack. Different virtual machines within an anti-affinity group are allocated to different hosts. Then, the VIM returns an allocation result to the VNFM. The OpenStack is an open source program managed by a cloud computing platform, is a base of a virtualized infrastructure manager (Virtualized Infrastructure Manager, VIM) in NFV, and plays a key role in abstracting a physical infrastructure to a programmable cloud platform and managing a load on a cloud. The OpenStack herein is merely an example, and this application is not limited hereto. For example, the OpenStack may be replaced by VMware, or may be replaced by another open source program. In a step S4, the VNFM feeds back an overall deployment result of the VNF to the NFVO based on the VM allocation result from the VIM.

The prior art has the following disadvantages: For a complex distributed VNF, an anti-affinity deployment policy is only at a host level, and a scenario requirement for VNFI distribution within the VNF cannot be met. In addition, because of limited host resources, a strict anti-affinity condition certainly increases a VNF deployment failure probability.

To resolve at least one of the foregoing problems, the inventor of this application puts forward a method and an apparatus for deploying a virtualized network element device according to this application. The following describes in detail this application with reference to the embodiments of this application.

An implementation of this application is to deploy a VNF by using a VNFM. According to a method for deploying a VNF in an embodiment of this application, first, the VNFM obtains a deployment template for a VM of a VNF and a logical region in which the VM is located. The deployment template for the VM indicates the quantity of VMs and a service resource specification of each VM. The logical region in which the VM is located is determined based on the deployment template for the VM of the VNF, an available resource for the VM in an NFVI, and a deployment requirement. The deployment requirement indicates a logical region for performing an affinity and/or anti-affinity setting, and an affinity group and/or anti-affinity group setting. The logical region for performing the affinity and/or anti-affinity setting is one of a DC, a region, an AZ, and an HA. A service resource specification of the VM describes a resource requirement for the VM, for example, a central processing unit (central processing unit, CPU) running speed of the VM, a memory size of the VM, or a storage space size of the VM. Next, the VNFM obtains, through mapping based on the logical region in which the VM is located, a physical region in which the VM is located. A mapping relationship exists between the logical region and the physical region. A table of the mapping relationship between the logical region and the physical region is prestored in the VNFM. After obtaining, through mapping based on the logical region in which the VM is located, the physical region in which the VM is located, the VNFM sends deployment request information to a VIM. The deployment request information includes the service resource specification of the VM and the physical region in which the VM is located. Herein, the logical region is shown as in FIG. 2, and details are not described herein.

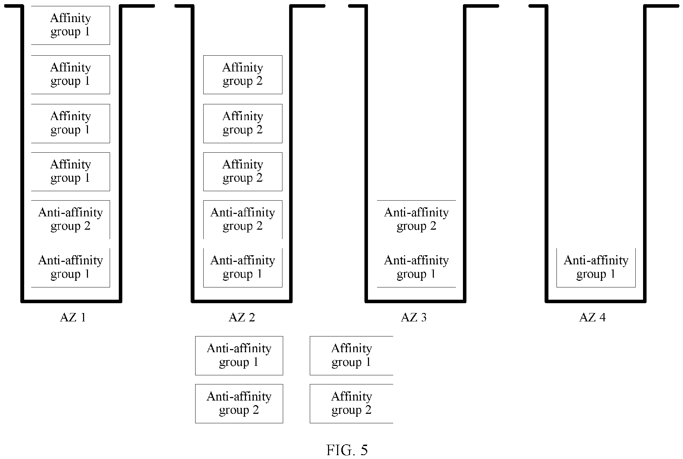

FIG. 5 is a schematic diagram of affinity and anti-affinity deployment according to an embodiment of this application. Affinity indicates that during VM deployment of a VNF, VMs need to be deployed in a same logical region, and the VMs are not mutually exclusive and are deployed in the same logical region. FIG. 5 includes two affinity groups established based on an affinity requirement, which are respectively an affinity group 1 and an affinity group 2. Four VMs in the affinity group 1 are deployed in a same AZ 1, and three VMs in the affinity group 2 are deployed in a same AZ 2. In other words, VMs in a same affinity group are required to be deployed in a same AZ, thereby implementing an affinity setting at an AZ level. Anti-affinity indicates that during VM deployment, VMs need to be deployed in different logical regions because the VM are mutually exclusive and cannot be deployed in a same logical region. For example, FIG. 5 includes two anti-affinity groups established based on an anti-affinity requirement, which are respectively an anti-affinity group 1 and an anti-affinity group 2. Four VMs in the anti-affinity group 1 are respectively deployed in the AZ 1, the AZ 2, an AZ 3, and an AZ 4, and three VMs in the anti-affinity group 2 are respectively deployed in the AZ 1, the AZ 2, and the AZ 3. In other words, VMs in a same anti-affinity group are mutually exclusive, and are required to be deployed in different AZs. In this case, the affinity/anti-affinity deployment is implemented at the AZ level. This application is not limited to the affinity and anti-affinity deployment at the AZ level. The affinity/anti-affinity deployment may also be implemented at a DC level, a region level, and an HA level. In other words, the affinity indicates that VMs are deployed in a same logical region, and the anti-affinity is that VMs are deployed in different logical regions.

According to this embodiment of this application, the affinity and/or anti-affinity deployment can be performed at the DC, the region, the AZ, and the HA level, to improve flexibility of VM deployment, so that deployment based on the affinity and/or anti-affinity can be performed in a larger range.

In a possible implementation, the deployment template for the VM of the VNF and the logical region in which the VM is located that are obtained by the VNFM are from an NFVO. The logical region in which the VM is located is determined based on a resource ratio allocation principle used during VM deployment. The resource ratio allocation principle indicates a resource utilization requirement and/or a resource equalization requirement for the available resource for deploying the VM. Therefore, the following case can be avoided: An anti-affinity deployment requirement is considered in VIM during VM deployment.

In a possible implementation, that the VNFM obtains the deployment template for the VM of the VNF and the logical region in which the VM is located includes that the VNFM receives, from an NFVO, the deployment template for the VM of the VNF, the available resource for deploying the VM, and the deployment requirement; and the VNFM automatically deploys the logical region in which the VM is located, based on the deployment template for the VM of the VNF, the available resource for deploying the VM, and the deployment requirement. In this way, affinity and/or anti-affinity deployment can be performed by using the VNFM, thereby improving flexibility of VM deployment.

In a possible implementation, a resource ratio allocation principle used during VM deployment is further received from the NFVO. The resource ratio allocation principle indicates a resource utilization requirement and/or a resource equalization requirement for the available resource for deploying the VM. When the logical region in which the VM is located is automatically deployed, the VM is further deployed based on the resource ratio allocation principle.

In this case, the resource ratio allocation principle may be, for example, that based on a service requirement, VMs are expected to be uniformly deployed in physical regions to implement resource equalization of VM deployment; or that based on a service requirement, VMs are deployed in physical regions when a certain resource allocation ratio is met; or that remaining resources in physical regions after VMs are deployed are required to meet a certain ratio. A specific limitation is not imposed hereto.

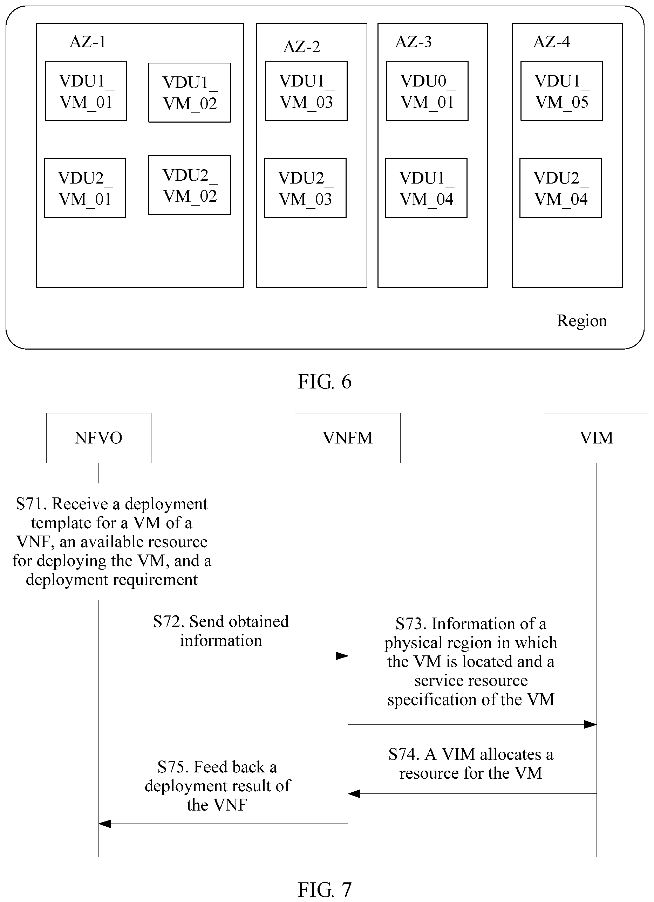

FIG. 6 is a diagram of VM deployment based on a resource ratio allocation principle according to an embodiment of this application. As shown in FIG. 6, a region includes four AZs that are respectively AZ-1, AZ-2, AZ-3, and AZ-4. It is known that a resource ratio between the AZs for deploying VMs is that AZ-1:AZ-2:AZ-3:AZ-4=2:1:1:1, and the ratio is (2/5):(1/5):(1/5):(1/5) after normalization processing.

A virtualization deployment unit (Virtualization Deployment Unit, VDU) is used to deploy a VM. When a VDU 1 is used to deploy a VM, for each AZ, a difference between the foregoing preset ratio and a normalized ratio of a resource amount already used for deploying the VM is calculated. A currently to-be-deployed VM is deployed in an AZ with a maximum positive difference, and so on, so that resource utilization is orchestrated based on a preconfigured resource ratio. Then, when a VDU 2 is used to deploy a VM, orchestration is performed in a same manner. As shown in FIG. 6, the VDU 1 includes five virtual machines: VDU1_VM_01, VDU1_VM_02, VDU1_VM_03, VDU1_VM_04, and VDU1_VM_05. The VDU 2 includes four virtual machines: VDU2_VM_01, VDU2_VM_02, VDU2_VM_03, and VDU2_VM_04. A VDU 0 includes one virtual machine: VDU0_VM_01. A total of 10 virtual machines needs to be deployed. During initial deployment, for example, when the VDU 1 is deployed first, all resources of each AZ have not been used. A difference for AZ-1 is 2/5, a difference for AZ-2 is 1/5, a difference for AZ-3 is 1/5, and a difference for AZ-4 is 1/5. Therefore, the difference for AZ-1 is the largest, and VDU1_VM_01 is deployed in AZ-1. In this case, a normalized ratio of a resource already used for deploying the VM in AZ-1 is 1/10. The difference for AZ-1 is 2/5-1/10, the difference for AZ-3 is 1/5, the difference for AZ-3 is 1/5, and the difference for AZ-4 is 1/5. Therefore, the difference for AZ-1 is still the largest, and VDU1_VM_02 is deployed in the AZ-1. In this case, the normalized ratio of the resource already used for deploying the VM in AZ-1 is 2/10. The difference for AZ-1 is 2/5-2/10=1/5, the difference for AZ-2 is 1/5, the difference for AZ-3 is 1/5, and the difference for AZ-4 is 1/5. The differences for AZ-1, AZ-2, AZ-3, and AZ-4 are all 1/5. Therefore, a current virtual machine may be deployed in any AZ. Deployment of other VMs is analogous. Finally, that the resource ratio between the AZs for deploying the VMs is AZ-1:AZ-2:ZA-3:AZ-4=2:1:1:1. To describe the resource ratio allocation principle, an affinity and/or anti-affinity requirement is not considered during VM deployment. In actual deployment, for example, VMs of the VDU 1 may be deployed in a same manner as FIG. 6, to implement that VDU1_VM_01 and VDU1_VM_02 are used as an affinity group, and VDU1_VM_02, VDU1_VM_03, VDU1_VM_04, and VDU1_VM_05 are used as an anti-affinity group.

Allocation is performed based on the resource ratio allocation principle in the foregoing. When a plurality of HAs, or AZs, or regions, or DCs are specified to deploy VMs, the VMs can be deployed by using a specified algorithm based on different resource ratios of the HAs, or the AZs, or the regions, or the DCs. For example, the deployment is performed based on an idle resource ratio. Therefore, a success rate of the virtual machine deployment can be improved. In addition, a resource can also be allocated properly.

In a possible implementation, VNF deployment information is received in a manner of an interface message, or is received by being described in a virtualized network function description file.

An implementation of this application is to deploy a VNF by using an NFVO. A method for deploying a VNF according to an embodiment of this application includes: receiving a deployment template for a VM of a VNF, an available resource for deploying the VM, and a deployment requirement, where the deployment template for the VM indicates the quantity of VMs and a service resource specification of each VM, the deployment requirement indicates a logical region for performing an affinity and/or anti-affinity setting, and an affinity group and/or anti-affinity group setting, and the logical region for performing the affinity and/or anti-affinity setting is one of a DC, a region, an AZ, and an HA; and automatically deploying the logical region in which the VM is located, based on the deployment template for the VM of the VNF, the available resource for deploying the VM, and the deployment requirement. During the foregoing deployment, the logical region in which the VM is located is one of the DC, the region, the AZ, and the HA. The service resource specification of the VM and the logical region in which the VM is located are sent to a VNFM. The affinity indicates that virtual machines are deployed in a same logical region, and the anti-affinity indicates that virtual machines are deployed in different logical regions.

In a possible implementation, a resource ratio allocation principle used during VM deployment is further received. The resource ratio allocation principle indicates a resource utilization requirement and/or a resource equalization requirement for the available resource for deploying the VM. When the logical region in which the VM is located is automatically deployed based on the deployment template for the VM of the VNF, the available resource for deploying the VM, and the deployment requirement, the VM is further deployed based on the resource ratio allocation principle. Therefore, resource utilization can be improved.

An example of the resource ratio allocation principle is the same as the foregoing description of deploying a VNF by using a VNFM. Details are not described herein again.

The following describes in detail the technical solutions in the embodiments of this application with reference to the accompanying drawings. FIG. 7 is a flowchart of VM deployment according to an embodiment of this application. This is used for VM deployment for a VNF. The VM deployment specifically includes the following steps.

Step S71: An NFVO receives a deployment template for a VM of the VNF, an available resource for deploying the VM, and a deployment requirement in VNF deployment. The deployment template for the VM of the VNF includes the quantity of VMs that need to be deployed for each VNF, a service resource specification of each VM, and the like. The service resource specification is, for example, a parameter such as a central processing unit (CPU) running speed, a memory size, or a storage space size. The available resource for deploying the VM indicates information such as a location and a size of the available resource in an NFVI. The deployment requirement indicates a specific level at which an affinity and/or anti-affinity setting is performed, and an affinity group and/or anti-affinity group setting during VM deployment.

Optionally, the NFVO further receives a resource ratio allocation principle. The resource ratio allocation principle indicates a resource utilization requirement and/or a resource equalization requirement for the available resource for deploying the VM. The resource ratio allocation principle may be, for example, that based on a service requirement, VMs are expected to be uniformly deployed in physical regions to implement resource equalization of VM deployment; or that based on a service requirement, VMs are deployed in physical regions when a certain resource allocation ratio is met; or that remaining resources in physical regions after VMs are deployed are required to meet a certain ratio. A specific limitation is not imposed hereto.

Step S72: The NFVO sends obtained information to a VNFM. To be specific, the VNFM receives, from the NFVO, the deployment template for the VNF, the available resource for deploying the VM, and the deployment requirement. When the VM is deployed with a consideration of the resource ratio allocation principle, the resource ratio allocation principle is further received.

The NFVO may send the foregoing content to the VNFM in a manner of an interface message; or may write, into a virtualized network function description (Virtualized Network Function Descriptor, VNFD) file, the foregoing content to be sent to the VNFM such as VNF deployment information and the deployment requirement, and send the file to the VNFM.

The VNFM deploys the VM of the VNF based on the deployment template for the VNF, the available resource for deploying the VM, and the deployment requirement. The VNFM parses the information received from the NFVO, and performs an affinity or anti-affinity setting based on a level that is for performing the affinity and/or anti-affinity setting and that is indicated in an affinity or anti-affinity requirement, for example, at a DC level, at a region level, at an AZ level, or at an HA level. A logical region in which the VM is located is determined by using the received available resource in the NFVI and with a consideration of the service resource specification of the VM, the level for performing the affinity and/or anti-affinity setting, and the affinity group and/or anti-affinity group setting. The VNFM converts and maps, to information of a physical region that a VIM understands, information of the logical region in which the VM is located. Specifically, the VNFM queries a prestored mapping table from a logical region to a physical region, and determines, based on the mapping table, an approximate physical region in which the VM needs to be located.

Herein, the VNFM obtains a logical region to which the VM is allocated, based on the service resource specification for the VNF, the available resource for deploying the VM, and the deployment requirement. The logical region herein may be a DC, a region, an AZ, or an HA. Therefore, an anti-affinity VM distribution policy can be extended from a host to an HA, an AZ, a region, or a DC, thereby improving flexibility of an anti-affinity capacity, and better meeting a balance between client deployment flexibility and overall reliability.

Optionally, the VNFM may further comprehensively consider the logical region to which the VM is to be allocated, based on the resource ratio allocation principle and with reference to a status of allocated resources of the NFVI. Herein, the resource ratio allocation principle may be, for example, that based on a service requirement, VMs are expected to be uniformly deployed in physical regions; or that based on a service requirement, VMs are deployed in physical regions when a certain resource allocation ratio is met; or that remaining resources in physical regions after VMs are deployed are required to meet a certain ratio. A specific limitation is not imposed hereto. An example is described in the description of FIG. 6. Details are not described herein again.

Based on the resource ratio allocation principle, by using a specific algorithm, the VM can be deployed based on different resource ratios between HAs, or AZs, or regions, or DCs, thereby significantly improving resource utilization, and increasing an application scenario of anti-affinity. In addition, the following case is avoided: Virtual machines are centrally deployed in a certain specified data center, region, availability zone, or host aggregate, thereby causing an insufficient resource and increasing a deployment failure probability. Therefore, availability of an overall scheme is improved.

Step S73: The VNFM sends, to the VIM, a resource requirement for the VM and information of a specific physical region to be allocated.

Step S74: The VIM allocates a resource for the VM

The VIM allocates a resource for each VM of the VNF based on the service resource specification of the VM and information of a physical location in which the VM is located that are received from the VNFM. Herein, the VNFM allocates the physical region in which the VM is located, with a consideration of the affinity or anti-affinity requirement. Therefore, the VIM does not need to consider the affinity and/or anti-affinity requirement during the VM deployment. In other words, the VNFM does not send the affinity and/or anti-affinity requirement to the VIM.

Step S75: The VNFM feeds back an overall deployment result of the VNF to the NFVO based on a VM allocation result from the VIM.

Deployment of the VNF is completed in the foregoing.

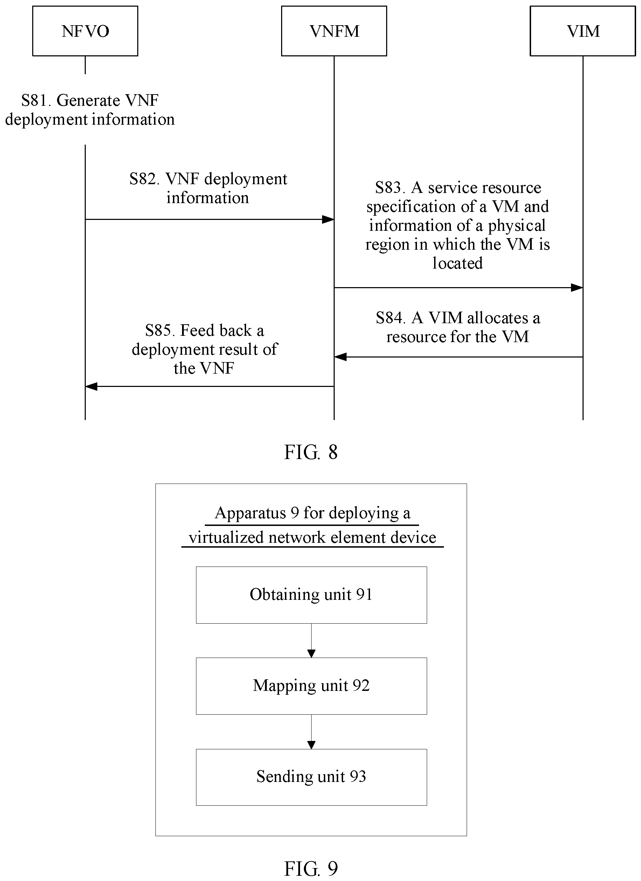

FIG. 8 is another flowchart of VM deployment according to an embodiment of this application.

Step S81: An NFVO receives a deployment template for a VM of a VNF, an available resource for deploying the VM, and a deployment requirement. The deployment template for the VM of the VNF includes the quantity of VMs that need to be deployed for each VNF, a service resource specification of each VM, and the like. The service resource specification is, for example, a parameter such as a central processing unit (CPU) running speed, a memory size, or a storage space size. The available resource for deploying the VM indicates information such as a location and a size of the available resource in an NFVI. The deployment requirement indicates a specific level at which an affinity and/or anti-affinity setting is performed, and an affinity group and/or anti-affinity group setting during VM deployment.

The NFVO deploys the VM of the VNF based on the deployment template for the VM of the VNF, the available resource for deploying the VM, and the deployment requirement. The NFVO performs an affinity or anti-affinity setting based on a level that is for performing the affinity and/or anti-affinity setting and that is indicated in an affinity or anti-affinity requirement, for example, at a DC level, at a region level, at an AZ level, or at an HA level. The NFVO determines a logical region in which the VM is located, by using the received available resource in the NFVI and with a consideration of service resource specification of the VNF, the level for performing the affinity and/or anti-affinity setting, and the affinity group and/or anti-affinity group setting; and uses, as VNF deployment information, the service resource specification of the VM and the logical region in which the VM is located.

The logical region herein may be a DC, a region, an AZ, or an HA. Therefore, an anti-affinity VM distribution policy can be extended from a host to an HA, an AZ, a region, or a DC, thereby improving flexibility of an anti-affinity capacity, and better meeting a balance between client deployment flexibility and overall reliability.

Optionally, the NFVO may further receive a resource ratio allocation principle. Herein, the resource ratio allocation principle may be, for example, that based on a service requirement, VMs are expected to be uniformly deployed in physical regions; or that based on a service requirement, VMs are deployed in physical regions when a certain resource allocation ratio is met; or that remaining resources in physical regions after VMs are deployed are required to meet a certain ratio. A specific limitation is not imposed hereto. An example is described in the description of FIG. 6. Details are not described herein again.

During VM deployment, a specific logical region to which the VM is to be allocated is comprehensively considered based on the resource ratio allocation principle and with reference to a status of allocated resources of the logical region. Based on the resource ratio allocation principle, by using a specific algorithm, the VM can be distributed based on different resource ratios between HAs, or AZs, or regions, or DCs, thereby significantly improving resource utilization, and increasing an application scenario of anti-affinity. In addition, the following case is avoided: Virtual machines are centrally deployed in a certain specified data center, region, availability zone, or host aggregate, thereby causing an insufficient resource and increasing a deployment failure probability. Therefore, availability of an overall scheme is improved.

Step S82: The VNFM receives the VNF deployment information from the NFVO.

The NFVO may send the foregoing content to the VNFM in a manner of an interface message; or may write the VNF deployment information into a VNFD file, and send the file to the VNFM.

After receiving the information from the NFVO, the VNFM converts and maps, to information of a specific physical region that a VIM understands, information of a specific logical region of the VM that is included in the VNF deployment information.

Step S83: The VNFM sends, to the VIM, a service resource requirement for the VM and information of a physical region to be allocated.

Step S84: The VIM allocates a resource for the VM

The VIM allocates a resource for each VM of the VNF based on the service resource specification of the VM and information of a physical location in which the VM is located that are received from the VNFM. Herein, the VNFM allocates the physical region in which the VM is located, with a consideration of the affinity or anti-affinity requirement. Therefore, the VIM does not need to consider the affinity and/or anti-affinity requirement during the VM deployment. In other words, the VNFM does not send the affinity and/or anti-affinity requirement to the VIM.

Step S85: The VNFM feeds back an overall deployment result of the VNF to the NFVO based on a VM allocation result from the VIM.

Deployment of the VNF is completed in the foregoing.

According to the embodiment of this application in FIG. 7 or FIG 8, an anti-affinity VM distribution policy is extended from a host to an HA, an AZ, a region, or a DC, thereby improving flexibility of an anti-affinity capacity, and better meeting a balance between client deployment flexibility and overall reliability. In addition, by using a specific algorithm, the VM can be distributed based on different resource ratios between HAs, or AZs, or regions, or DCs, thereby significantly improving resource utilization, and increasing an application scenario of anti-affinity. Further, the following case is avoided: VMs are centrally deployed in a certain specified host group/AZ/region/DC, thereby causing an insufficient resource and increasing a deployment failure probability. Therefore, availability of an overall scheme is improved.

The following describes an apparatus for deploying a VNF, where the apparatus corresponds to the foregoing method.

FIG. 9 is a block diagram of an apparatus for deploying a VNF according to an embodiment of this application.

The apparatus 9 for deploying a VNF in FIG. 9 includes: an obtaining unit 91, configured to obtain a deployment template for a VM of a VNF and a logical region in which the VM is located, where the deployment template for the VM indicates the quantity of VMs and a service resource specification of each VM, the logical region in which the VM is located is determined based on the deployment template for the VM of the VNF, an available resource for deploying the VM, and a deployment requirement, the deployment requirement indicates a logical region for performing an affinity and/or anti-affinity setting, and an affinity group and/or anti-affinity group setting, and the logical region for performing the affinity and/or anti-affinity setting is one of a DC, a region, an AZ, and an HA; a mapping unit 92, configured to obtain, through mapping based on the logical region in which the VM is located, a physical region in which the VM is located; and a sending unit 93, configured to send deployment request information to a VIM, where the deployment request information includes the service resource specification of each VM and the physical region in which the VM is located.

Optionally, the deployment template for the VM of the VNF and the logical region in which the VM is located are obtained from a network functions virtualization orchestrator. The logical region in which the VM is located is determined based on a resource ratio allocation principle used during VM deployment. The resource ratio allocation principle indicates a resource utilization requirement and/or a resource equalization requirement for the available resource for deploying the VM

Optionally, the obtaining unit 91 includes: a receiving unit, configured to receive, from an NFVO, the deployment template for the VM of the VNF, the available resource for deploying the VM, and the deployment requirement; and a deployment unit, configured to automatically deploy the logical region in which the VM is located based on the deployment template for the VM of the VNF, the available resource for deploying the VM, and the deployment requirement.

Optionally, the receiving unit is configured to further receive a resource ratio allocation principle used during VM deployment. The resource ratio allocation principle indicates a resource utilization requirement and/or a resource equalization requirement for the available resource for deploying the VM; and the deployment unit is configured to further deploy the VM based on the resource ratio allocation principle.

Optionally, the receiving unit performs the receiving in a manner of an interface message or in a manner of a VNFD file.

Optionally, affinity indicates that VMs are deployed in a same logical region, and anti-affinity indicates that VMs are deployed in different logical regions.

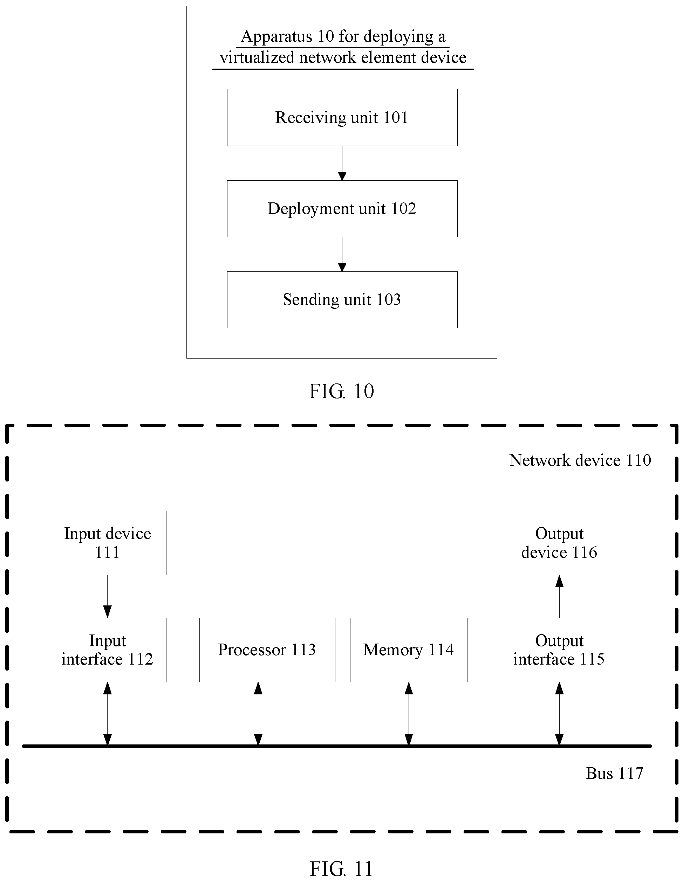

FIG. 10 is another block diagram of an apparatus for deploying a VNF according to an embodiment of this application.

The apparatus 10 for deploying the VNF in FIG. 10 includes: a receiving unit 101, configured to receive a deployment template for a VM of the VNF, an available resource for deploying the VM, and a deployment requirement, where the deployment template for the VM indicates the quantity of VMs and a service resource specification of each VM, the deployment requirement indicates a logical region for performing an affinity and/or anti-affinity setting, and an affinity group and/or anti-affinity group setting, and the logical region for performing the affinity and/or anti-affinity setting is one of a DC, a region, an AZ, and an HA; a deployment unit 102, configured to automatically deploy a logical region in which the VM is located, based on the deployment template for the VM of the VNF, the available resource for deploying the VM, and the deployment requirement; and a sending unit 103, configured to send, to a VNF manager, a service resource specification of the VM and the logical region in which the VM is located.

Optionally, the receiving unit 101 is configured to further receive a resource ratio allocation principle used during VM deployment. The resource ratio allocation principle indicates a resource utilization requirement and/or a resource equalization requirement for the available resource for deploying the VM. When automatically deploying the logical extent in which the VM is located, based on the deployment template for the VM of the VNF, the available resource for deploying the VM, and the deployment requirement, the deployment unit further deploys the VM based on the resource ratio allocation principle.

Optionally, affinity indicates that VMs are deployed in a same logical region, and anti-affinity indicates that VMs are deployed in different logical regions.

According to the foregoing apparatus for deploying a VNF described in FIG. 9 and FIG. 10, an anti-affinity VM distribution policy can be extended from a host to an HA, an AZ, a region, or a DC, thereby improving flexibility of an anti-affinity capacity, and better meeting a balance between client deployment flexibility and overall reliability. In addition, the VM can be distributed based on different resource ratios between HAs, or AZs, or regions, or DCs, thereby significantly improving resource utilization, and increasing an application scenario of anti-affinity. In addition, the following case is avoided: Virtual machines are centrally deployed in a certain specified data center, region, availability zone, or host aggregate, thereby causing an insufficient resource and increasing a deployment failure probability. Therefore, availability of an overall scheme is improved.

FIG. 11 is a schematic block diagram of a network device for deploying a VNF according to an embodiment of this application. As shown in FIG. 11, the network device 110 includes an input device 111, an input interface 112, a processor 113, a memory 114, an output interface 115, and an output device 116.

The input interface 112, the processor 113, the memory 114, and the output interface 115 are connected to each other by using a bus 117. The input device 111 and the output device 116 are connected to the bus 117 by respectively using the input interface 112 and the output interface 115, to further connect to another component of the network device 110.

Specifically, the input device 111 receives external input information, and transmits the input information to the processor 113 by using the input interface 112. The processor 113 processes the input information according to a computer executable instruction stored in the memory 114, to generate output information, temporarily or permanently stores the output information in the memory 114, and then transmits the output information to the output device 116 by using the output interface 115. The output device 116 outputs the output information to the outside of the network device 110 for use by a user.

The network device 110 may perform the steps in the embodiments of this application.

The processor 113 may be one or more central processing units (central processing unit, CPU). When the processor 113 is one CPU, the CPU may be a single-core CPU, or may be a multi-core CPU.

The memory 114 may be, but is not limited to, one or more of a random access memory (RAM), a read-only memory (ROM), an erasable programmable read only memory (EPROM), a compact disc read-only memory (CD-ROM), a hard disk, and the like. The memory 114 is configured to store program code.

All or some of the foregoing embodiments may be implemented by using software, hardware, firmware, or any combination thereof. When all or some of the foregoing embodiments are implemented in a form of a computer program product, the computer program product includes one or more computer instructions. When the computer program instructions are loaded or executed on a computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, microwave, or the like) manner. The computer readable storage medium may be any usable medium accessible by a computer; or a data storage device integrating one or more usable media, for example, a server or a data center. The usable medium may be a magnetic medium (for example, a floppy disk, a hard disk, or a magnetic tape), an optical medium (for example, a digital video disk (digital video disk, DVD)), a semiconductor medium (for example, a solid-state drive (solid state disk, SSD)), or the like.

The embodiments in this application are all described in a progressive manner. For same or similar parts in the embodiments, refer to these embodiments. Each embodiment focuses on a difference from other embodiments. Especially, apparatus and system embodiments are basically similar to a method embodiment, and therefore are described briefly. For related parts, refer to partial descriptions in the method embodiment.

## Claims

1. A method for deploying a virtualized network element device, comprising:
obtaining a deployment template for a virtual machine of a virtualized network element device and a logical region in which the virtual machine is located, wherein the deployment template for the virtual machine indicates the quantity of virtual machines and a service resource specification of each virtual machine, the logical region in which the virtual machine is located is determined based on the deployment template for the virtual machine of the virtualized network element device, an available resource for deploying the virtual machine, and a deployment requirement, the deployment requirement indicates a logical region for performing an affinity and/or anti-affinity setting, and an affinity group and/or anti-affinity group setting, and the logical region for performing the affinity and/or anti-affinity setting is one of a data center, a region, an availability zone, and a host aggregate;
obtaining, through mapping based on the logical region in which the virtual machine is located, a physical region in which the virtual machine is located; and
sending deployment request information to a layer I infrastructure manager, wherein the deployment request information comprises the service resource specification of each virtual machine and the physical region in which the virtual machine is located.

2. The method according to claim 1, wherein
the deployment template for the virtual machine of the virtualized network element device and the logical region in which the virtual machine is located are obtained from a network functions virtualization orchestrator, and
the logical region in which the virtual machine is located is determined based on a resource ratio allocation principle used during virtual machine deployment, wherein the resource ratio allocation principle indicates a resource utilization requirement and/or a resource equalization requirement for the available resource for deploying the virtual machine.

3. The method according to claim 1, wherein
the obtaining a deployment template for a virtual machine of a virtualized network element device and a logical region in which the virtual machine is located comprises:
receiving, from a network functions virtualization orchestrator, the deployment template for the virtual machine of the virtualized network element device, the available resource for deploying the virtual machine, and the deployment requirement; and
automatically deploying the logical region in which the virtual machine is located, based on the deployment template for the virtual machine of the virtualized network element device, the available resource for deploying the virtual machine, and the deployment requirement.

4. The method according to claim 3, comprising:
further receiving, from the network functions virtualization orchestrator, a resource ratio allocation principle used during virtual machine deployment, wherein the resource ratio allocation principle indicates a resource utilization requirement and/or a resource equalization requirement for the available resource for deploying the virtual machine; and
when the logical region in which the virtual machine is located is automatically deployed, further deploying, based on the resource ratio allocation principle, the logical region in which the virtual machine is located.

5. The method according to claim 3 or 4, wherein
the receiving is performed in a manner of an interface message or in a manner of a virtualized network function description file.

6. The method according to any one of claims 1 to 5, wherein
the affinity indicates that virtual machines are deployed in a same logical region, and the anti-affinity indicates that virtual machines are deployed in different logical regions.

7. A method for deploying a virtualized network element device, comprising:
receiving a deployment template for a virtual machine of a virtualized network element device, an available resource for deploying the virtual machine, and a deployment requirement, wherein the deployment template for the virtual machine indicates the quantity of virtual machines and a service resource specification of each virtual machine, the deployment requirement indicates a logical region for performing an affinity and/or anti-affinity setting, and an affinity group and/or anti-affinity group setting, and the logical region for performing the affinity and/or anti-affinity setting is one of a data center, a region, an availability zone, and a host aggregate;
automatically deploying a logical region in which the virtual machine is located, based on the deployment template for the virtual machine of the virtualized network element device, the available resource for deploying the virtual machine, and the deployment requirement; and
sending, to a virtualized network element device manager, the service resource specification of the virtual machine and the logical region in which the virtual machine is located.

8. The method according to claim 7, comprising:
further receiving a resource ratio allocation principle used during virtual machine deployment, wherein the resource ratio allocation principle indicates a resource utilization requirement and/or a resource equalization requirement for the available resource for deploying the virtual machine; and
when the logical region in which the virtual machine is located is automatically deployed, further deploying, based on the resource ratio allocation principle, the logical region in which the virtual machine is located.

9. The method according to claim 7 or 8, wherein
the affinity indicates that virtual machines are deployed in a same logical region, and the anti-affinity indicates that virtual machines are deployed in different logical regions.

10. An apparatus for deploying a virtualized network element device, comprising:
an obtaining unit, configured to obtain a deployment template for a virtual machine of a virtualized network element device and a logical region in which the virtual machine is located, wherein the deployment template for the virtual machine indicates the quantity of virtual machines and a service resource specification of each virtual machine, the logical region in which the virtual machine is located is determined based on the deployment template for the virtual machine of the virtualized network element device, an available resource for deploying the virtual machine, and a deployment requirement, the deployment requirement indicates a logical region for performing an affinity and/or anti-affinity setting, and an affinity group and/or anti-affinity group setting, and the logical region for performing the affinity and/or anti-affinity setting is one of a data center, a region, an availability zone, and a host aggregate;
a mapping unit, configured to obtain, through mapping based on the logical region in which the virtual machine is located, a physical region in which the virtual machine is located; and
a sending unit, configured to send deployment request information to a layer I infrastructure manager, wherein the deployment request information comprises the service resource specification of each virtual machine and the physical region in which the virtual machine is located.

11. The apparatus according to claim 10, wherein
the deployment template for the virtual machine of the virtualized network element device and the logical region in which the virtual machine is located are obtained from a network functions virtualization orchestrator, and
the logical region in which the virtual machine is located is determined based on a resource ratio allocation principle used during virtual machine deployment, wherein the resource ratio allocation principle indicates a resource utilization requirement and/or a resource equalization requirement for the available resource for deploying the virtual machine.

12. The apparatus according to claim 10, wherein
the obtaining unit comprises:
a receiving unit, configured to receive, from a network functions virtualization orchestrator, the deployment template for the virtual machine of the virtualized network element device, the available resource for deploying the virtual machine, and the deployment requirement; and
a deployment unit, configured to automatically deploy the logical region in which the virtual machine is located, based on the deployment template for the virtual machine of the virtualized network element device, the available resource for deploying the virtual machine, and the deployment requirement.

13. The apparatus according to claim 12, wherein
the receiving unit is configured to further receive a resource ratio allocation principle used during virtual machine deployment, wherein the resource ratio allocation principle indicates a resource utilization requirement and/or a resource equalization requirement for the available resource for deploying the virtual machine; and
the deployment unit is configured to further deploy, based on the resource ratio allocation principle, the logical region in which the virtual machine is located.

14. The apparatus according to claim 12 or 13, wherein
the receiving unit performs the receiving in a manner of an interface message or in a manner of a virtualized network function description file.

15. The apparatus according to any one of claims 10 to 14, wherein
the affinity indicates that virtual machines are deployed in a same logical region, and the anti-affinity indicates that virtual machines are deployed in different logical regions.

16. An apparatus for deploying a virtualized network element device, comprising:
a receiving unit, configured to receive a deployment template for a virtual machine of the virtualized network element device, an available resource for deploying the virtual machine, and a deployment requirement, wherein the deployment template for the virtual machine indicates the quantity of virtual machines and a service resource specification of each virtual machine, the deployment requirement indicates a logical region for performing an affinity and/or anti-affinity setting, and an affinity group and/or anti-affinity group setting, and the logical region for performing the affinity and/or anti-affinity setting is one of a data center, a region, an availability zone, and a host aggregate;
a deployment unit, configured to automatically deploy a logical region in which the virtual machine is located, based on the deployment template for the virtual machine of the virtualized network element device, the available resource for the virtual machine, and the deployment requirement; and
a sending unit, configured to send, to a virtualized network element device manager, the service resource specification of the virtual machine and the logical region in which the virtual machine is located.

17. The apparatus according to claim 16, wherein
the receiving unit is configured to further receive a resource ratio allocation principle used during virtual machine deployment, wherein the resource ratio allocation principle indicates a resource utilization requirement and/or a resource equalization requirement for the available resource for deploying the virtual machine; and
the deployment unit is configured to further deploy, based on the resource ratio allocation principle, the logical region in which the virtual machine is located.

18. The apparatus according to claim 16 or 17, wherein
the affinity indicates that virtual machines are deployed in a same logical region, and the anti-affinity indicates that virtual machines are deployed in different logical regions.
